# EUROPEAN PATENT APPLICATION

(11) **EP 2 040 381 A1**
(43) Date of publication of application: **25.03.2009**
(21) Application number: 07791269.9
(22) Date of filing: 25.07.2007
(51) Int. Cl.: H03K 19/0175, G06F 1/12, H01L 21/82, H01L 21/822, H01L 27/04

(54) **SEMICONDUCTOR INTEGRATED CIRCUIT AND LAYOUT TECHNIQUE THEREOF**

(30) Priority: 10.11.2006 JP 2006305495
(71) Applicant: Panasonic Corporation, Kadoma-shi Osaka 571-8501 (JP)
(72) Inventor: NAKAMURA, Akihiro c/o Panasonic Corporation IPROC, Osaka 540-6207 (JP)
(74) Representative: Grünecker, Kinkeldey, Stockmair & Schwanhäusser Anwaltssozietät
(86) International application number: PCT/JP2007/064553
(87) International publication number: WO 2008/056468

(57) **Abstract**

An internal circuit (**151**) has a timing constraint only in relation to an internal-signal transmitting and receiving circuit (**102**) and no timing constraint in relation to an external-signal receiving circuit (**101**). A layout accordingly becomes possible in which the external-signal receiving circuit (**101**) is not affected by the timing constraint of the internal circuit (**151**). Since a layout of the external-signal receiving circuit (**101**) thus realizes shorter distances between the external-signal receiving circuit (**101**) and the external clock terminal (**154**) and between the external-signal receiving circuit (**101**) and the external data terminal (**155**) so as to satisfy the timing constraints between the external-signal receiving circuit (**101**) and the external clock and data terminals (**155**) and (**154**), the timing constraint between an AC clock signal and an AC data signal is easily satisfied.

## Description

### Technical Field

The present invention relates to a semiconductor integrated circuit including a circuit for externally inputting an AC clock signal and an AC data signal and a layout method of the semiconductor integrated circuit, and particularly to a technique for easily satisfying a timing constraint generated between an AC clock signal and an AC data signal.

### Background Art

In a semiconductor integrated circuit, a clock signal and a data signal are inputted from outside of the semiconductor integrated circuit and the externally inputted data signal is processed in the semiconductor integrated circuit in synchronization with the externally inputted clock signal or a clock signal generated inside the semiconductor integrated circuit. Accordingly, a semiconductor integrated circuit has a circuit for inputting a clock signal and a data signal from outside of the semiconductor integrated circuit.

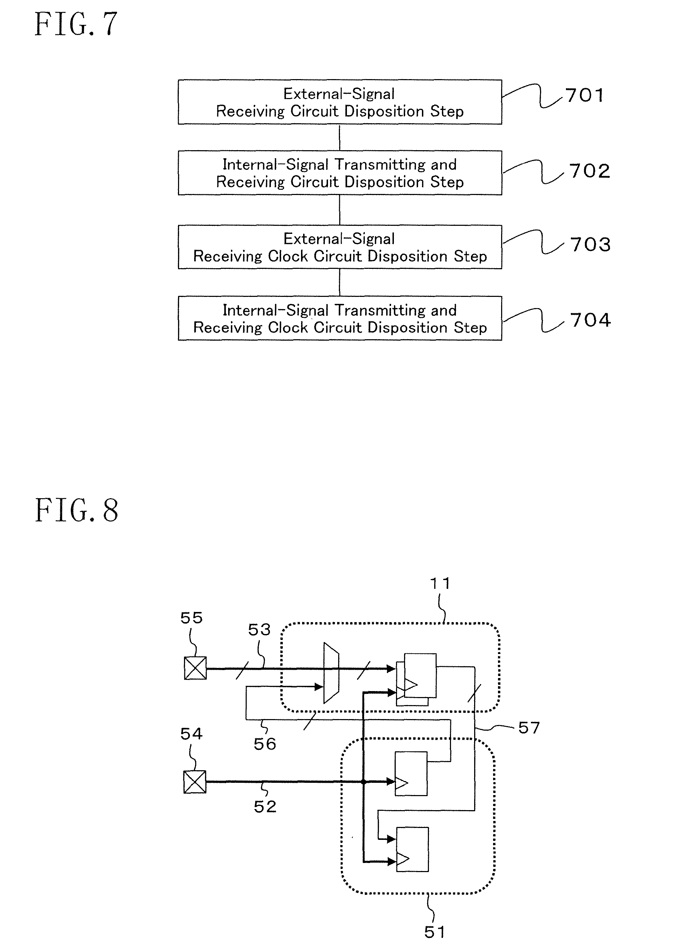

FIG. **8** is a block diagram of a conventional semiconductor integrated circuit having a circuit for inputting a clock signal and a data signal from outside of the semiconductor integrated circuit. In FIG. **8****,** the element **11** is an external-signal receiving circuit, **51** is an internal circuit, **52** is an AC clock signal wiring, **53** is an AC data signal wiring, **54** is an external clock terminal, **55** is an external data terminal, **56** is an internal circuit transmission data signal wiring, and **57** is an internal circuit receiving data signal wiring.

The AC data signal wiring **53** is to transmit an AC data signal inputted from the external data terminal **55** to the external-signal receiving circuit **11.**

The AC clock signal wiring **52** is to transmit an AC clock signal inputted from the external clock terminal **54** to the external-signal receiving circuit **11.**

The internal circuit transmission data signal wiring **56** is to transmit an internal signal generated in the internal circuit **51** to the external-signal receiving circuit **11.**

The internal circuit receiving data signal wiring **57** is to transmit an output signal of the external-signal receiving circuit **11** to the internal circuit **51.**

The external-signal receiving circuit **11** processes the AC data signal transmitted via the AC data signal wiring **53** and the internal signal transmitted via the internal circuit transmission data signal wiring **56** in synchronization with the AC clock signal transmitted via the AC clock signal wiring **52** to transmit the output signal to the internal circuit **51.**

Such circuit structure in which the AC data signal is processed in synchronization with the AC clock signal causes a timing constraint that does not allow the difference between the timing of the AC data signal to be inputted from outside of the semiconductor integrated circuit and the timing of the AC clock signal to be inputted from outside of the semiconductor integrated circuit to be greater than a certain interval.

To satisfy this constraint, a semiconductor integrated circuit has to be laid out so as to make the difference between the delay time of the AC data signal wiring **53** where the AC data signal passes through and the delay time of the AC clock signal wiring **52** where the AC clock signal passes through to fall within a certain range.

In recent years however, semiconductor integrated circuits were advanced in miniaturization and acceleration. AC clock signals accordingly have higher frequencies, and thus the allowance for a timing error between an AC clock signal and an AC data signal became smaller. The AC clock signal wiring **52** and the AC data signal wiring **53** had increasing variation in the delay time due to deterioration in signal quality during production or because of the power noise, for example. Such increase in the variation became a factor of an increased number of steps and more difficulty for layout of a semiconductor integrated circuit that satisfies the allowance for a timing error between an AC clock signal and an AC data signal.

A conventional semiconductor integrated circuit accordingly employed a layout that has shorter distances between the external-signal receiving circuit **11** and the external data terminal **55** and between the external-signal receiving circuit **11** and the external clock terminal **54** to reduce the delay time of the AC data signal wiring **53** and the delay time of the AC clock signal wiring **52,** and thus the timing constraint between an AC clock signal and an AC data signal were easily satisfied (refer to Patent Document 1, for example).
Patent Document 1: JP 2001-67864 A (page 3)

### Disclosure of Invention

### Problems to be solved by the invention

The external-signal receiving circuit **11,** however, has to satisfy the timing constraint in relation to the internal circuit **51** to transmit and receive a data signal to and from the internal circuit **51.** Accordingly, the external-signal receiving circuit **11** has to be laid out at a position that satisfies both the timing constraint in relation to the internal circuit **51** and the timing constraint between an AC clock signal and an AC data signal.

The external-signal receiving circuit **11** is thus affected by the timing constraint in relation to the internal circuit **51** and cannot be disposed in the layout that has shorter distances between the external-signal receiving circuit **11** and the external data terminal **55** and between the external-signal receiving circuit **11** and the external clock terminal **54.** Such external-signal receiving circuit **11** thus causes a problem in which the number of steps does not decrease and the degree of difficulty is not moderated, both for layout of a semiconductor integrated circuit, to satisfy the timing constraint between an AC clock signal and an AC data signal.

The present invention was made by addressing such problem, and an object of the present invention is to provide a semiconductor integrated circuit, easily satisfying the timing constraint between an AC clock signal and an AC data signal without affected by the timing constraint in relation to an internal circuit, and a layout method thereof.

### Means for solving the problems

In order to solve this problem, a semiconductor integrated circuit according to the present invention is a semiconductor integrated circuit including a circuit to which an AC clock signal and an AC data signal are externally inputted, the semiconductor integrated circuit includes: an external-signal receiving circuit for receiving the AC data signal inputted from outside of the semiconductor integrated circuit; an internal-signal transmitting and receiving circuit for receiving a signal generated in an internal circuit of the semiconductor integrated circuit and/or transmitting a signal to the internal circuit; a data signal wiring for transmitting an output signal of the external-signal receiving circuit to the input signal of the internal-signal transmitting and receiving circuit; and an AC clock signal wiring for providing the AC clock signal inputted from outside of the semiconductor integrated circuit for the external-signal receiving circuit and the internal-signal transmitting and receiving circuit.

In the semiconductor integrated circuit, the external-signal receiving circuit includes an external-signal receiving flip flop for receiving the AC data signal inputted from outside of the semiconductor integrated circuit, the external-signal receiving flip flop latches the AC data signal and transmits the latched signal via the data signal wiring to the internal-signal transmitting and receiving circuit, and the AC clock signal inputted from outside of the semiconductor integrated circuit is provided via the AC clock signal wiring for the external-signal receiving flip flop.

In the semiconductor integrated circuit, the internal-signal transmitting and receiving circuit includes an internal-signal transmitting and receiving flip flop for receiving the output signal of the external-signal receiving circuit transmitted via the data signal wiring, and the AC clock signal inputted from outside of the semiconductor integrated circuit is provided for the internal-signal transmitting and receiving flip flop via the AC clock signal wiring.

In the semiconductor integrated circuit, the external-signal receiving circuit includes a plurality of the external signal receiving flip flops or the internal-signal transmitting and receiving circuit includes a plurality of the internal-signal transmitting and receiving flip flops, and the semiconductor integrated circuit includes a plurality of the data signal wirings.

The semiconductor integrated circuit further includes a circuit or a circuit element which operates in synchronization with a clock signal instead of the external-signal receiving flip flop or the internal-signal transmitting and receiving flip flop.

In the semiconductor integrated circuit, a clock latency of the AC clock signal wiring connected to the external-signal receiving circuit is shorter than a clock latency of the AC clock signal wiring connected to the internal-signal transmitting and receiving circuit.

In the semiconductor integrated circuit, a timing relaxation circuit is interposed in the data signal wiring connecting the output signal of the external-signal receiving circuit and the input signal of the internal-signal transmitting and receiving circuit.

In the semiconductor integrated circuit, the timing relaxation circuit is any of a delay buffer, an inversion latch, and an inversion flip flop which cause a timing delay.

The semiconductor integrated circuit further includes an external-signal receiving clock selector and an internal-signal transmitting and receiving clock selector capable of selecting any one of a plurality of the AC clock signals. In the semiconductor integrated circuit, an output signal of the external-signal receiving clock selector is inputted to the external-signal receiving circuit, and an output signal of the internal-signal transmitting and receiving clock selector is inputted to the internal-signal transmitting and receiving circuit.

In the semiconductor integrated circuit, the external-signal receiving clock selector has a function of selecting any one clock signal from an internal clock signal generated inside of the semiconductor integrated circuit and the plurality of AC clock signals to provide for the external-signal receiving circuit, and the internal-signal transmitting and receiving clock selector has a function of selecting any one clock signal from the internal clock signal and the plurality of AC clock signals to provide for the internal-signal transmitting and receiving circuit.

The semiconductor integrated circuit further includes: a plurality of the external-signal receiving circuits; and an external-signal reception selecting circuit capable of selecting any output signal of the plurality of external-signal receiving circuits. In the semiconductor integrated circuit, the output signals of the external-signal reception selecting circuits are inputted to the internal-signal transmitting and receiving circuit.

A layout method of the semiconductor integrated circuit according to the present invention includes: an external-signal receiving circuit disposition step for disposing the external-signal receiving circuit in a vicinity of an external data terminal or an external clock terminal of the semiconductor integrated circuit; an internal-signal transmitting and receiving circuit disposition step for disposing the internal-signal transmitting and receiving circuit at an arbitrary position of the semiconductor integrated circuit; an external-signal receiving clock circuit disposition step for disposing and wiring the AC clock signal wiring and/or the external-signal receiving clock selector connected between the external clock terminal and the external-signal receiving circuit in the vicinity of the external clock terminal; and an internal-signal transmitting and receiving clock circuit disposition step for disposing and wiring the AC clock signal wiring and/or the internal-signal transmitting and receiving clock selector connected between the external clock terminal and the internal-signal transmitting and receiving circuit.

### Effects of the invention

According to the present invention, a layout is realized that has shorter distances between an external-signal receiving circuit and an external data terminal and between an external-signal receiving circuit and an external clock terminal for easy satisfaction of the timing constraint between an AC clock signal and an AC data signal.

### Brief Description of Drawings

FIG. **1** is a block diagram of a semiconductor integrated circuit according to the first embodiment of the present invention.
FIG. **2** is a block diagram of a semiconductor integrated circuit according to the second embodiment of the present invention.
FIG. **3** is a block diagram of a semiconductor integrated circuit according to the third embodiment of the present invention.
FIG. **4** is a timing diagram of the semiconductor integrated circuit according to the third embodiment of the present invention.
FIG. **5** is a block diagram of a semiconductor integrated circuit according to the fourth embodiment of the present invention.
FIG. **6** is a block diagram of a semiconductor integrated circuit of the fifth embodiment of the present invention.
FIG. **7** is a flow chart of a layout method of a semiconductor integrated circuit according to the sixth embodiment of the present invention.
FIG. **8** is a block diagram of a conventional semiconductor integrated circuit.

### Description of Reference Numerals

- **11**: External-Signal Receiving Circuit
- **51**: Internal Circuit
- **52**: AC Clock Signal Wiring
- **53**: AC Data Signal Wiring
- **54**: External Clock Terminal
- **55**: External Data Terminal
- **56**: Internal Circuit Transmission Data Signal Wiring
- **57**: Internal Circuit Receiving Data Signal Wiring
- **101**: External-Signal Receiving Circuit
- **102**: Internal-Signal Transmitting and Receiving Circuit
- **103**: Data Signal Wiring
- **104**: External-Signal Receiving Flip Flop
- **105**: Internal-Signal Transmitting and Receiving Flip Flop
- **151**: Internal Circuit
- **152**: AC Clock Signal Wiring
- **153**: AC Data Signal Wiring
- **154**: External Clock Terminal
- **155**: External Data Terminal
- **156**: Internal Circuit Transmission Data Signal Wiring
- **157**: Internal Circuit Receiving Data Signal Wiring
- **201**: Clock Tree
- **301**: Timing Relaxation Circuit
- **302**: Inversion Flip Flop
- **501**: External-Signal Receiving Clock Selector
- **502**: Internal-Signal Transmitting and Receiving Clock Selector
- **503**: Internal Clock Generation Circuit
- **601**: First External-Signal Receiving Circuit
- **602**: Second External-Signal Receiving Circuit
- **603**: External-Signal Reception Selecting Circuit
- **604**: First External-Signal Receiving Clock Selector
- **605**: Second External-Signal Receiving Clock Selector
- **606**: First External Data Terminal
- **607**: Second External Data Terminal
- **608**: First External Clock Terminal
- **609**: Second External Clock Terminal
- **701**: External-Signal Receiving Circuit Disposition Step
- **702**: Internal-Signal Transmitting and Receiving Circuit Disposition Step
- **703**: External-Signal Receiving Clock Circuit Disposition Step
- **704**: Internal-Signal Transmitting and Receiving Clock Circuit Disposition Step

### Best Mode for Carrying Out the Invention

Hereinafter, embodiments of the present invention are illustrated with reference to the drawings.

### First Embodiment

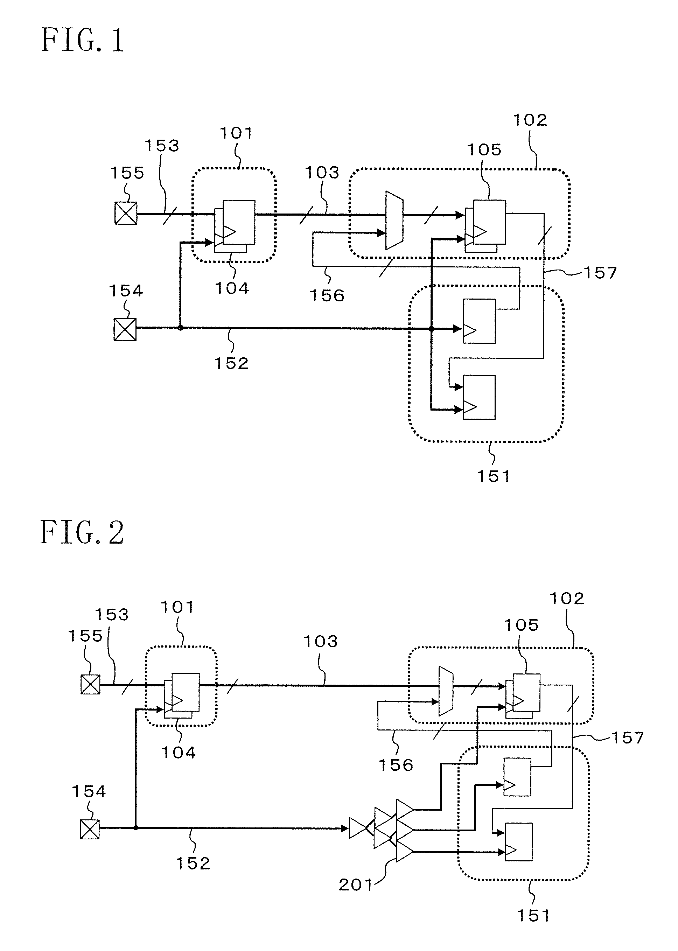

FIG. **1** shows a block diagram of a semiconductor integrated circuit according to the first embodiment of the present invention. In FIG. **1****,** the element **101** is an external-signal receiving circuit, **102** is an internal-signal transmitting and receiving circuit, **103** is a data signal wiring, **104** is an external-signal receiving flip flop, **105** is an internal-signal transmitting and receiving flip flop, **151** is an internal circuit, **152** is an AC clock signal wiring, **153** is an AC data signal wiring, **154** is an external clock terminal, **155** is an external data terminal, **156** is an internal circuit transmission data signal wiring, and **157** is an internal circuit receiving data signal wiring.

The external-signal receiving circuit **101** is structured to receive an AC data signal inputted from the external data terminal **155** via the AC data signal wiring **153**, latch the AC data signal in the external-signal receiving flip flop **104** in synchronization with an AC clock signal inputted from the external clock terminal **154,** and transmit the received AC data signal to the data signal wiring **103.**

The internal-signal transmitting and receiving circuit **102** is structured to receive the AC data signal transmitted from the external-signal receiving circuit **101** and an output signal of the internal signal generation circuit **151** via the data signal wiring **103** and the internal circuit transmission data signal wiring **156,** latch the two signals in the internal-signal transmitting and receiving flip flop **105** in synchronization with the AC clock signal, and transmit the received data to the internal circuit receiving data signal wiring **157.**

The internal circuit **151** is structured to receive the data transmitted from the internal-signal transmitting and receiving circuit **102** and transmit the data to the internal-signal transmitting and receiving circuit **102** in synchronization with an AC clock signal.

The AC clock signal wiring **152** is structured to provide the AC clock signal inputted from the external clock terminal **154** for the external-signal receiving circuit **101,** the internal-signal transmitting and receiving circuit **102,** and the internal circuit **151.**

The description below describes an operation of the semiconductor integrated circuit structured as shown in FIG. **1****.**

An AC data signal inputted from the external data terminal **155** is transmitted via the AC data signal wiring **153,** and an AC clock signal inputted from the external clock terminal **154** is transmitted via the AC clock signal wiring **152,** both to the external-signal receiving circuit **101.** The AC data signal is latched in the external-signal receiving flip flop **104** in synchronization with the AC clock signal. The external-signal receiving circuit **101** is accordingly affected by the timing constraint between the AC clock signal and the AC data signal.

The AC data signal latched in the external-signal receiving circuit **101** in synchronization with the AC clock signal is transmitted to the internal-signal transmitting and receiving circuit **102** to be latched in synchronization with the AC clock signal. Accordingly, a timing constraint is generated between the external-signal receiving circuit **101** and the internal-signal transmitting and receiving circuit **102.**

The AC data signal latched in the internal-signal transmitting and receiving circuit **102** in synchronization with the AC clock signal is transmitted to the internal circuit **151** to be latched in synchronization with the AC clock signal. A signal generated in the internal circuit **151** in synchronization with the AC clock signal is transmitted to the internal-signal transmitting and receiving circuit **102** to be latched in synchronization with the AC clock signal. Accordingly, a timing constraint is generated between the internal-signal transmitting and receiving circuit **102** and the internal circuit **151.**

As described above, a semiconductor integrated circuit structured as shown in FIG. **1** has three timing constraints in total: a timing constraint between the external-signal receiving circuit **101** and the external clock or data terminal **154** or **155,** a timing constraint between the external-signal receiving circuit **101** and the internal-signal transmitting and receiving circuit **102,** and a timing constraint between the internal-signal transmitting and receiving circuit **102** and the internal circuit **151.**

The timing constraint is, however, generated with the internal circuit **151** only in relation to the internal-signal transmitting and receiving circuit **102,** and no timing constraint is generated in relation to the external-signal receiving circuit **101.** The external-signal receiving circuit **101** is thus disposed in a layout without affected by the timing constraint of the internal circuit **151.**

A layout of the external-signal receiving circuit **101,** therefore, becomes possible that has shorter distances between the external-signal receiving circuit **101** and the external clock terminal **154** and between the external-signal receiving circuit **101** and the external data terminal **155** to satisfy the timing constraint between the external-signal receiving circuit **101** and the external clock or data terminal **154** or **155.**

Although in this embodiment described is the structure in which the external-signal receiving circuit **101** employs the external-signal receiving flip flop **104** and the internal-signal transmitting and receiving circuit **102** employs the internal-signal transmitting and receiving flip flop **105,** it should be noted that the equivalent effect is also obtained in a case that the external-signal receiving circuit **101** or the internal-signal transmitting and receiving circuit **102** employ a circuit or a circuit element operated in synchronization with AC clock signals, such as an SRAM.

Although in this embodiment described is the case that both the internal circuit transmission data signal wiring **156** and the internal circuit receiving data signal wiring **157** are disposed between the internal-signal transmitting and receiving circuit **102** and the internal circuit **151,** an equivalent effect is also obtained in a case that only either the internal circuit transmission data signal wiring **156** or the internal circuit receiving data signal wiring **157** is disposed.

An equivalent effect is also obtained in a case of a structure in which not only each one but each plurality of AC data signal wirings **153,** data signal wirings **103,** internal circuit transmission data signal wirings **156,** and internal circuit receiving data signal wirings **157** is disposed and each plurality of external-signal receiving flip flops **104** and internal-signal transmitting and receiving flip flops **105** is disposed for an operation in the external-signal receiving circuit **101,** the internal-signal transmitting and receiving circuit **102,** and the internal circuit **151,** in synchronization with the AC clock signal.

### Second Embodiment

FIG. **2** shows a block diagram of a semiconductor integrated circuit according to the second embodiment of the present invention. In FIG. **2****,** the element **201** is a clock tree. The difference from FIG. **1** is that the clock tree **201** is interposed in the AC clock signal wiring **152** disposed between the external clock terminal **154** and the internal-signal transmitting and receiving circuit **102** and between the external clock terminal **154** and the internal circuit **151.**

The description below describes an operation of a semiconductor integrated circuit structured as shown in FIG. **2****.**

An AC clock signal inputted from the external clock terminal **154** is delayed in the clock tree **201** and inputted to the internal-signal transmitting and receiving circuit **102** and the internal circuit **151.** The clock latency of the AC clock signal wiring 152 to be inputted to the external-signal receiving circuit **101** is accordingly shorter than the clock latency of the AC clock signal wiring **152** to be inputted to the internal-signal transmitting and receiving circuit **102** and the internal circuit **151.** The timing of the AC clock signal to be inputted to the internal-signal transmitting and receiving circuit **102** and the internal circuit **151** is delayed more than the timing of the AC clock signal to be inputted to the external-signal receiving circuit **101.**

A layout of a general semiconductor integrated circuit employs a method that interposes the clock tree **201** into a clock wiring in order to equalize the clock latencies of the clock signals inputted to the synchronous circuits and avoid wave rounding in a clock signal. Such method is prone to increase the signal delay time in the clock tree **201** with an increased number of synchronous circuits for which the clock signal is provided.

In contrast, the semiconductor integrated circuit structured as shown in FIG. **2** does not have a clock tree **201** interposed in relation to the external-signal receiving circuit **101.** The clock latency of the AC clock signal wiring **152** inputted to the external-signal receiving circuit **101** is, accordingly, not affected by the increased signal delay time of the clock tree **201** due to the increased number of synchronous circuits included in the internal-signal transmitting and receiving circuit **102** and the internal circuit **151.** Even in the case of the increased number of synchronous circuits included in the internal-signal transmitting and receiving circuit **102** and the internal circuit **151,** a layout becomes possible that reduces the delay time of the AC clock signal wiring **152,** and thus such semiconductor integrated circuit has an effect of easily satisfying the timing constraint between an AC clock signal and an AC data signal.

Although in this embodiment described is the case of the clock tree **201** interposed in the AC clock signal wiring **152** disposed between the external clock terminal **154** and the internal circuit **151,** it should be noted that an equivalent effect is also obtained by a unit having an element or a circuit structure that realizes a time delay in a signal, such as a buffer and a delay circuit, instead of the clock tree **201.**

In a case that the clock tree **201** is not used, an equivalent effect is also obtained as long as a semiconductor integrated circuit includes a wiring structure in such a way that the clock latency of the AC clock signal wiring **152** inputted to the external-signal receiving circuit **101** is shorter than the clock latency of the AC clock signal wiring **152** inputted to the internal-signal transmitting and receiving circuit **102** and the internal circuit **151.**

### Third Embodiment

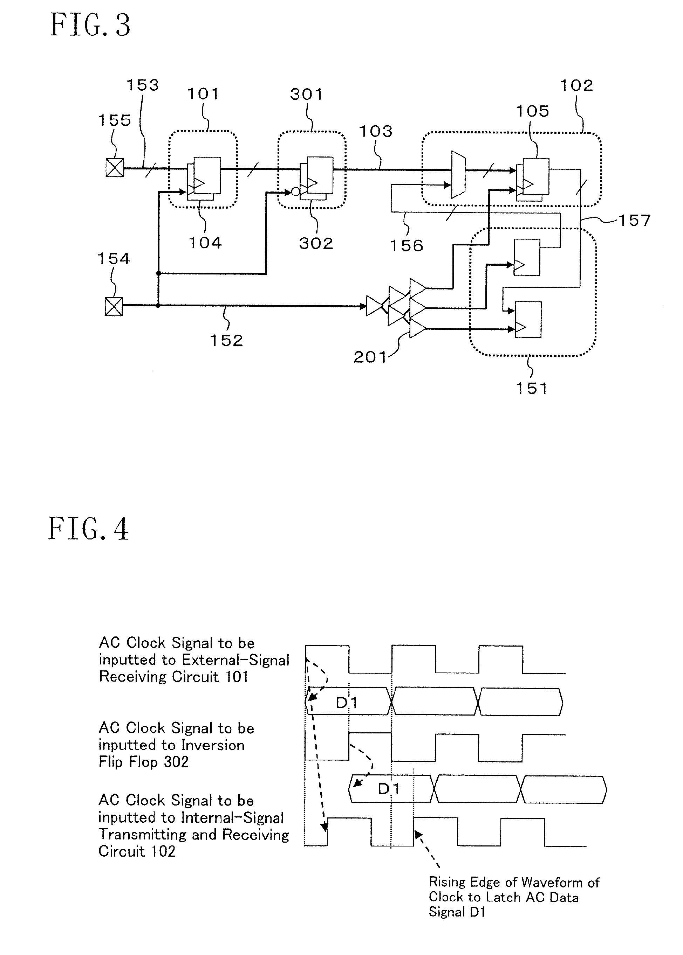

FIG. **3** shows a block diagram of a semiconductor integrated circuit according to the third embodiment of the present invention. In FIG. **3****,** the element **301** is a timing relaxation circuit and **302** is an inversion flip flop.

The difference from FIG. **2** is that the timing relaxation circuit **301** is interposed in the data signal wiring **103.** The timing relaxation circuit **301** is structured in such a way that the signal transmitted from the external-signal receiving circuit **101** is latched in the inversion flip flop **302** in synchronization with the inversion signal of the AC clock signal to transmit the signal to the internal-signal transmitting and receiving circuit **102.**

The clock latency from the external clock terminal **154** to the timing relaxation circuit **301** is equivalent to, or negligibly different from, the clock latency from the external clock terminal **154** to the external-signal receiving circuit **101.**

The description below describes an operation of the semiconductor integrated circuit structured as shown in FIG. **3****.**

The AC data signal transmitted from the external-signal receiving circuit **101** in synchronization with the AC clock signal is latched in the inversion flip flop **302** in synchronization with the inversion signal of the AC clock signal to be transmited to the internal-signal transmitting and receiving circuit **102.** The AC data signal transmited to the internal-signal transmitting and receiving circuit **102** is latched in the internal-signal transmitting and receiving flip flop **105** in synchronization with the AC clock signal delayed by the clock tree **201.**

FIG. **4** shows a timing diagram of the semiconductor integrated circuit structured as FIG. **3****.**

On a rising edge of the waveform of the AC clock signal inputted to the external-signal receiving circuit **101,** AC data signal D1 is transmitted to be held until the next rising edge of the waveform of the AC clock signal. The circuit connected at the next stage of the external-signal receiving circuit **101** has to latch AC data signal D1 on the rising edge immediately subsequent to the rising edge of the waveform of the AC clock signal on which AC data signal D 1 has been transmitted.

Shoud the next stage of the external-signal receiving circuit **101** be the internal-signal transmitting and receiving circuit **102** as shown in the block diagram of the semiconductor integrated circuit in FIG. **2****,** the clock latency of the AC clock signal responding to the external-signal receiving circuit **101** would be shorter than the clock latency responding to the internal-signal transmitting and receiving circuit **102** so that the timing of the AC clock signal inputted to the internal-signal transmitting and receiving circuit **102** would be delayed more than the timing of the AC clock signal inputted to the external-signal receiving circuit **101.** The internal-signal transmitting and receiving circuit **102** accordingly would not be able to latch AC data signal D1 on the rising edge immediately subsequent to the rising edge of the waveform of the AC clock signal on which AC data signal D1 would have been transmitted.

In contrast, in the semiconductor integrated circuit structured as shown in FIG. **3****,** AC data signal D1 outputted from the external-signal receiving circuit **101** is latched once with the inversion signal of the AC clock signal in the timing relaxation circuit **301** so that AC data signal D1 is delayed by a half cycle of the AC clock signal. This signal delay compensates for the timing deterioration due to the AC clock signal delay in the clock tree **201.** It, therefore, becomes possible for the internal-signal transmitting and receiving circuit **102** to latch AC data signal D1 on the rising edge immediately subsequent to the rising edge of the waveform of the AC clock signal on which AC data signal D 1 has been transmitted.

Although in this embodiment described is the case that the inversion flip flop **302** is employed for the timing relaxation circuit **301,** it should be noted that an equivalent effect is also obtained as long as the semiconductor integrated circuit includes a unit having an element or a circuit structure realizing a time delay of a signal, such as an inversion latch, a buffer, and a delay circuit, instead of the inversion flip flop **302.**

### Fourth Embodiment

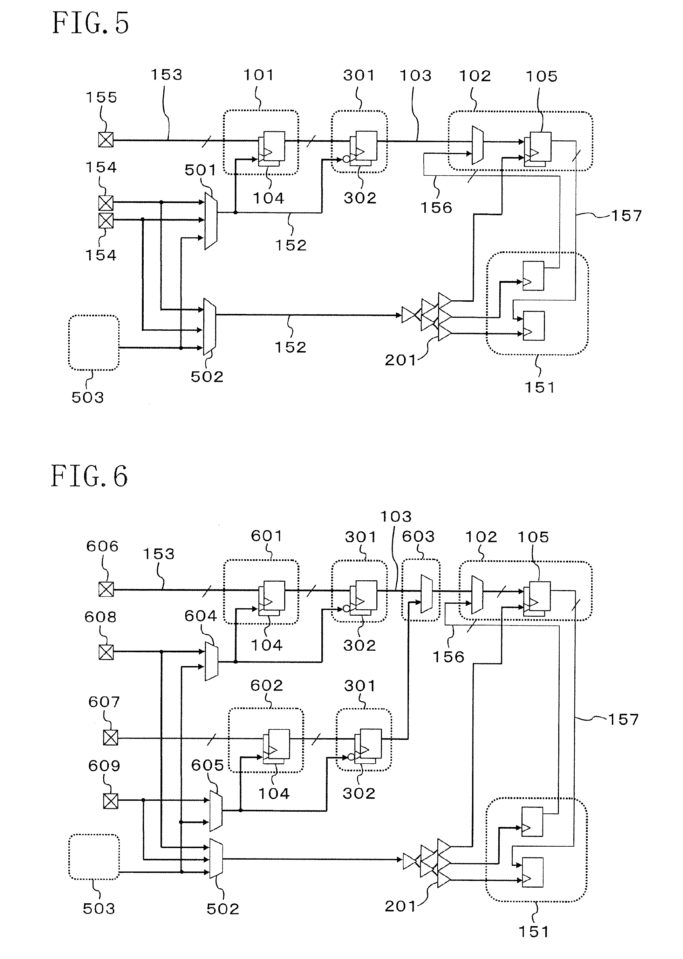

FIG. **5** shows a block diagram of a semiconductor integrated circuit according to the fourth embodiment of the present invention. In FIG. **5****,** the element **501** is an external-signal receiving clock selector, **502** is an internal-signal transmitting and receiving clock selector, and **503** is an internal clock generation circuit.

The difference from FIG. **3** is that the semiconductor integrated circuit includes a plurality of external clock terminals **154,** and the AC clock signals inputted from the plurality of external clock terminals **154** and an internal clock signal outputted from an internal clock generation circuit **503** are inputted to an external-signal receiving clock selector **501** and an internal-signal transmitting and receiving clock selector **502.** The output signal of the external-signal receiving clock selector **501** is inputted to the external-signal receiving circuit **101,** and the internal-signal transmitting and receiving clock selector **502** is inputted to the internal-signal transmitting and receiving circuit **102** and the internal circuit **151.**

The description below describes an operation of the semiconductor integrated circuit structured as shown in FIG. **5****.**

The external-signal receiving clock selector **501** and the internal-signal transmitting and receiving clock selector **502** select any of the inputted output signals from the internal clock generation circuit **503** and the plurality of external clock terminals **154.** The input clock signal selected by the external-signal receiving clock selector **501** is defined the same as the input clock signal selected by the internal-signal transmitting and receiving clock selector **502.** For example, in a case that the external-signal receiving clock selector **501** selects one of the AC clock signals, the internal-signal transmitting and receiving clock selector **502** also selects the same AC clock signal.

Such configuration transmits the input clock signal selected by the external-signal receiving clock selector **501** and the internal-signal transmitting and receiving clock selector **502** to all of the external-signal receiving circuit **101,** the internal-signal transmitting and receiving circuit **102,** and the internal circuit **151.** Even in a case that the plurality of AC clock signals are inputted from the plurality of external clock terminals **154,** a layout thus becomes possible that reduce the delay time of the AC clock signal wiring **152** connected from the external clock terminals **154** to the external-signal receiving circuit **101,** and this embodiment is effective for easy satisfaction of the timing constraint between an AC clock signal and an AC data signal.

Although this embodiment described the case that the AC clock signals inputted from the plurality of external clock terminals **154** and the internal clock signal outputted from the internal clock generation circuit **503** are inputted to the external-signal receiving clock selector **501** and the internal-signal transmitting and receiving clock selector **502,** it should be noted that an equivalent effect is also obtained in a case only the AC clock signals inputted from the plurality of external clock terminals **154** are inputted to the external-signal receiving clock selector **501** and the internal-signal transmitting and receiving clock selector **502.**

### Fifth Embodiment

FIG. **6** shows a block diagram of a semiconductor integrated circuit according to the fifth embodiment of the present invention. In FIG. **6**, the element **601** is a first external-signal receiving circuit, **602** is a second external-signal receiving circuit, **603** is an external-signal reception selecting circuit, **604** is a first external-signal receiving clock selector, **605** is a second external-signal receiving clock selector, **606** is a first external data terminal **607** is a second external data terminal, **608** is a first external clock terminal, and **609** is a second external clock terminal.

This semiconductor integrated circuit is structured in such a way that an output signal of the first external-signal receiving circuit **601** and an output signal of the second external-signal receiving circuit **602** are inputted via the timing relaxation circuit 301 to the external-signal reception selecting circuit **603,** and an output signal of the external-signal reception selecting circuit **603** is inputted to the internal-signal transmitting and receiving circuit **102.**

The difference from FIG. **5** is that the structure shown in FIG. **6** has each pair of elements equivalent for the external-signal receiving circuit **101,** the external clock terminals **154,** the external data terminal **155,** and the external-signal receiving clock selector **501** in FIG. **5****,** which are respectively the first and second external-signal receiving circuits **601** and **602,** the first and second external clock terminals **608** and **609,** the first and second external data terminals **606** and **607,** and the first and the second external-signal receiving clock selectors **604** and **605,** and that either one of the output signals of the first and second external-signal receiving circuits **601** and **602** is inputted to the internal-signal transmitting and receiving circuit **102.**

The description below describes an operation of the semiconductor integrated circuit structured as shown in FIG. **6**.

The first external-signal receiving clock selector **604,** the second external-signal receiving clock selector **605,** and the internal-signal transmitting and receiving clock selector **502** select either the output signal of the internal clock generation circuit **503** or the AC clock signal inputted from the first or second external clock terminal **608** or **609.**

The input clock signal selected by the first or second external-signal receiving clock selector **604** or **605** is defined the same as the input clock signal selected by the internal-signal transmitting and receiving clock selector **502.** For example, in a case that the first external-signal receiving clock selector **604** selects the AC clock signal inputted from the first external clock terminal **608,** the internal-signal transmitting and receiving clock selector **502** also selects the same AC clock signal.

Such structure enables the input clock signal selected by the first or second external-signal receiving clock selector **604** or **605** to be transmitted to all of the internal-signal transmitting and receiving circuit **102,** the internal circuit **151,** and the first or second external-signal receiving circuit **601** or **602.**

The AC clock signal inputted from the first external clock terminal **608** is inputted via the first external-signal receiving clock selector **604** to the first external-signal receiving circuit **601,** and the AC clock signal inputted from the second external clock terminal **609** is inputted via the second external-signal receiving clock selector **605** to the second external-signal receiving circuit **602.**

A layout thus becomes possible that reduces the delay time of the AC clock signal wiring **152** connected from the first external clock terminal **608** to the first external-signal receiving circuit **601** and reduces the delay time of the AC data signal **153** connected from the first external data terminal **606** to the first external-signal receiving circuit **601** so that the timing constraint, for the first external clock terminal **608** and the first external data terminal **606,** between an AC clock signal and an AC data signal is easily satisfied. A layout also becomes possible that reduces the delay time of the AC clock signal wiring **152** connected from the second external clock terminal **609** to the second external-signal receiving circuit **602** and reduces the delay time of the AC data signal **153** connected from the second external data terminal **607** to the second external-signal receiving circuit **602** so that the timing constraint, for the second external clock terminal **609** and the second external data terminal **607,** between an AC clock signal and an AC data signal is easily satisfied.

Even in a case that the first external clock terminal **608** or the first external data terminal **606** is disposed at a position physically distant from the second external clock terminal **609** or the second external data terminal **607,** a layout therefore becomes possible that has a shorter AC clock signal wiring **152** and a shorter AC data signal **153** respectively, and the semiconductor integrated circuit has an effect that easily satisfies the timing constraint between an AC clock signal and an AC data signal.

Although in this embodiment described is the case that each of the elements consisting of two components, which are the external-signal receiving circuits **601** and **602,** the external clock terminals **608** and **609,** the external data terminals **606** and **607,** and the external-signal receiving clock selectors **604** and **605,** it should be noted that an equivalent effect is also realized in a case that each elements consisting of three or more components.

### Sixth Embodiment

FIG. **7** shows a flow chart of a layout method of the semiconductor integrated circuit according to the sixth embodiment of the present invention. In FIG. **7**, the element **701** is an external-signal receiving circuit disposition step, **702** is an internal-signal transmitting and receiving circuit disposition step, **703** is an external-signal receiving clock circuit disposition step, and **704** is an internal-signal transmitting and receiving clock circuit disposition step.

Each process of the flow chart of the layout method of the semiconductor integrated circuit shown in FIG. **7** is described with an example of the semiconductor integrated circuit structured as shown in FIG. **6****.**

First, in the external-signal receiving circuit disposition step **701,** the first and second external-signal receiving circuits **601** and **602** are disposed in the vicinity of the first and second external data terminals **606** and **607** and the vicinity of the first and second external clock terminals **608** and **609,** respectively. A layout is thus realized that reduces the delay time of the AC data signal.

Next, in the internal-signal transmitting and receiving circuit disposition step **702,** the internal-signal transmitting and receiving circuit **102,** the internal circuit **151,** the timing relaxation circuit **301,** and the external-signal reception selecting circuit **603** are disposed at arbitrary positions of the semiconductor integrated circuit to satisfy the timing constraints between the internal-signal transmitting and receiving circuit **102** and the first or second external-signal receiving circuit **601** or **602** and between the internal-signal transmitting and receiving circuit **102** and the internal circuit **151.** It is possible to dispose these circuits without affected by the timing constraints between AC clock signals and AC data signals inputted from the first and second external data terminals **606** and **607,** and the first and second external clock terminals **608** and **609.**

Then, in the external-signal receiving clock circuit disposition step **703,** the AC clock signal wiring **152** connected between the first external clock terminal **608** and the first external-signal receiving circuit **601** and the first external-signal receiving clock selector **604** are disposed in the vicinity of the first external clock terminal **608,** and the AC clock signal wiring **152** connected between the second external clock terminal **609** and the second external-signal receiving circuit **602** and the second external-signal receiving clock selector **605** are disposed in the vicinity of the second external clock terminal **609.** A layout is thus realized to reduce the delay times of the AC clock signals connected to the first and second external-signal receiving circuit **601** and **602.**

Lastly, in the internal-signal transmitting and receiving clock circuit disposition step **704,** the AC clock signal wirings **152** connected from the first and second external clock terminals **608** and **609** to the internal-signal transmitting and receiving circuit **102** and the internal circuit **151,** the internal-signal transmitting and receiving clock selector **502,** and the clock tree **201** are wired or disposed. It is possible to dispose these circuits without affected by the timing constraints between AC clock signals and AC data signals inputted from the first and second external data terminals **606** and **607** and the first and second external clock terminals **608** and **609.**

As described above, in this embodiment, the external-signal receiving circuit disposition step **701** and the external-signal receiving clock circuit disposition step **703** include disposition of elements to satisfy the timing constraints generated in the courses from the first and second external clock terminals **608** and **609** and the first and second external data terminals **606** and **607** to the first and second external-signal receiving circuits **601** and **602.** The internal-signal transmitting and receiving circuit disposition step **702** and the internal-signal transmitting and receiving clock circuit disposition step **704** include disposition of elements to satisfy the timing constraints generated in the courses from the first and second external-signal receiving circuits **601** and **602** to the internal-signal transmitting and receiving circuit **102** and from the internal-signal transmitting and receiving circuit **102** to the internal circuit **151.** Since the disposition steps to satisfy the timing constraints related to the first and second external data terminals **606** and **607** and the first and second external clock terminals **608** and **609** and the disposition steps to satisfy the timing constraints not related to these terminals are separately provided as the disposition steps to satisfy the timing constraints of the semiconductor integrated circuit, this embodiment is effective for realizing a layout that easily satisfies the timing constraints between AC clock signals and AC data signals.

### Industrial Applicability

The semiconductor integrated circuit and the layout method thereof according to the present invention has an effect of realizing a layout that has shorter distances between the external-signal receiving circuit and the external data terminal and between the external-signal receiving circuit and the external clock terminal in order to easily satisfy the timing constraints between AC clock signals and AC data signals without affected by the timing constraint in relation to the internal circuit, and thus they are useful, for example, as a semiconductor integrated circuit including a circuit to externally input an AC clock signal and an AC data signal.

## Claims

1. A semiconductor integrated circuit including a circuit to which an AC clock signal and an AC data signal are externally inputted, the semiconductor integrated circuit comprising:
an external-signal receiving circuit for receiving the AC data signal inputted from outside of the semiconductor integrated circuit;
an internal-signal transmitting and receiving circuit for receiving a signal generated in an internal circuit of the semiconductor integrated circuit and/or transmitting a signal to the internal circuit;
a data signal wiring for transmitting an output signal of the external-signal receiving circuit to an input signal of the internal-signal transmitting and receiving circuit; and
an AC clock signal wiring for providing the AC clock signal inputted from outside of the semiconductor integrated circuit for the external-signal receiving circuit and the internal-signal transmitting and receiving circuit.

2. The semiconductor integrated circuit according to claim 1, wherein
the external-signal receiving circuit includes an external-signal receiving flip flop for receiving the AC data signal inputted from outside of the semiconductor integrated circuit,
the external-signal receiving flip flop latches the AC data signal and transmits the latched signal via the data signal wiring to the internal-signal transmitting and receiving circuit, and
the AC clock signal inputted from outside of the semiconductor integrated circuit is provided via the AC clock signal wiring for the external-signal receiving flip flop.

3. The semiconductor integrated circuit according to claim 1, wherein
the internal-signal transmitting and receiving circuit includes an internal-signal transmitting and receiving flip flop for receiving the output signal of the external-signal receiving circuit transmitted via the data signal wiring, and
the AC clock signal inputted from outside of the semiconductor integrated circuit is provided for the internal-signal transmitting and receiving flip flop via the AC clock signal wiring.

4. The semiconductor integrated circuit according to claim 2 or 3, wherein
the external-signal receiving circuit includes a plurality of the external-signal receiving flip flops, or the internal-signal transmitting and receiving circuit includes a plurality of the internal-signal transmitting and receiving flip flops, and
the semiconductor integrated circuit comprises a plurality of the data signal wirings.

5. The semiconductor integrated circuit according to any one of claims 2 through 4 further comprising a circuit or a circuit element which operates in synchronization with a clock signal instead of the external-signal receiving flip flop or the internal-signal transmitting and receiving flip flop.

6. The semiconductor integrated circuit according to any one of claims 1 through 5,
wherein a clock latency of the AC clock signal wiring connected to the external-signal receiving circuit is shorter than a clock latency of the AC clock signal wiring connected to the internal-signal transmitting and receiving circuit.

7. The semiconductor integrated circuit according to claim 6, wherein a timing relaxation circuit is interposed in the data signal wiring connecting the output signal of the external-signal receiving circuit and the input signal of the internal-signal transmitting and receiving circuit.

8. The semiconductor integrated circuit according to claim 7, wherein the timing relaxation circuit is any of a delay buffer, an inversion latch, and an inversion flip flop which cause a timing delay.

9. The semiconductor integrated circuit according to any one of claims 1 through 8 further comprising an external-signal receiving clock selector and an internal-signal transmitting and receiving clock selector capable of selecting any one of a plurality of the AC clock signals, wherein
an output signal of the external-signal receiving clock selector is inputted to the external-signal receiving circuit, and
an output signal of the internal-signal transmitting and receiving clock selector is inputted to the internal-signal transmitting and receiving circuit.

10. The semiconductor integrated circuit according to claim 9, wherein
the external-signal receiving clock selector has a function of selecting any one clock signal from an internal clock signal generated inside of the semiconductor integrated circuit and the plurality of AC clock signals to provide for the external-signal receiving circuit, and
the internal-signal transmitting and receiving clock selector has a function of selecting any one clock signal from the internal clock signal and the plurality of AC clock signals to provide for the internal-signal transmitting and receiving circuit.

11. The semiconductor integrated circuit according to any one of claims 1 through 10 further comprising:
a plurality of the external-signal receiving circuits; and
an external-signal reception selecting circuit capable of selecting any output signal of the plurality of external-signal receiving circuits,
wherein the output signals of the external-signal reception selecting circuits are inputted to the internal-signal transmitting and receiving circuit.

12. A layout method of the semiconductor integrated circuit according to any one of claims 1 through 11, comprising:
an external-signal receiving circuit disposition step for disposing the external-signal receiving circuit in a vicinity of an external data terminal or an external clock terminal of the semiconductor integrated circuit;
an internal-signal transmitting and receiving circuit disposition step for disposing the internal-signal transmitting and receiving circuit at an arbitrary position of the semiconductor integrated circuit;
an external-signal receiving clock circuit disposition step for disposing and wiring the AC clock signal wiring and/or the external-signal receiving clock selector connected between the external clock terminal and the external-signal receiving circuit in the vicinity of the external clock terminal; and
an internal-signal transmitting and receiving clock circuit disposition step for disposing and wiring the AC clock signal wiring and/or the internal-signal transmitting and receiving clock selector connected between the external clock terminal and the internal-signal transmitting and receiving circuit.
